# EUROPEAN PATENT APPLICATION

(11) **EP 1 016 947 A2**
(43) Date of publication of application: **05.07.2000**
(21) Application number: 99204446.1
(22) Date of filing: 21.12.1999
(51) Int. Cl.: G06F 1/00

(54) **Portable electronic equipment key**

(30) Priority: 31.12.1998 US 114315 P
(71) Applicant: Texas Instruments Incorporated, Dallas, Texas 75251 (US)
(72) Inventor: Pearson, Joseph B., Cedar Park, Texas 78613 (US); Holodak, George A., Belton, Texas 76513 (US)
(74) Representative: Holt, Michael

(57) **Abstract**

A portable electronic equipment key is disclosed in which a reader is disposed within a piece of electronic equipment and a transponder, manifested as either a key fob or a credit card, for example, is brought within the read range of the reader. At the manufacturing level, the same digital signature is programmed into the memory of both the piece of electronic equipment and the transponder. The reader transmits a challenge to the transponder, and knowing the challenge sent and having the same digital signature as the transponder, anticipates the response from the transponder. The transponder receives the challenge, runs the challenge through the digital signature stored within, and transmits a response back to the reader. The reader upon receiving the expected response, sends an enable to turn on the piece of electronic equipment.

## Description

### Field of the Invention

This invention relates in general to security systems and more particularly to security systems for portable electronic equipment using RF-ID technology.

### Background of the Invention

Batteryless transponder radio frequency identification (RF-ID) systems rely on the rectification of the interrogation signal for power as has been taught in the U.S. patent number 5,074,774 of Josef Schuermann et al, issued October 1, 1991. This, in turn, requires that the transponder circuitry consume very little power. The application of such transponders, such as for animal identification, requires that the packaging be quite small. As a result of these constraints, most such transponders have read-only capability. As an example of an unsuitable approach for these applications, systems, such as that described in U.S. Pat. No. 5,310,999, "Secure Toll Collection System for Moving Vehicles", issued May 10, 1994, would consume far too much power, be too bulky and cost too much. The continued growth of applications of RF-ID systems requires improvements in avoiding false interrogations and data modification either deliberate or accidental.

Improved RF-ID systems have Read/Write transponders as disclosed in U.S. patent number 5,450,088 issued September 12, 1995, and are used in airline baggage tracking, warehouse goods tracking and assembly line piece part tracking. In the patent reference mentioned above, the application of toll collection from a rapidly moving vehicle requires a remote Read/Write capability with rapid response time. Some automobiles are now provided with remote transmitters for unlocking doors, fuel tanks and luggage compartments. Increased security as well as vehicle immobilization is highly desirable. Because of the added protection required to prevent unauthorized persons from realizing personal gain, a security solution must be found.

Another more current need has arisen in the area of security systems. Computer laptops are increasingly becoming targets of theft. For example, according to one of the nations leading computer insurers, 208,000 laptops were stolen in 1995, which represents an increase of 39% from the year before. Another common scenario is as follows; Meeting attendees meet, adjourn for lunch and return from lunch only to discover that their laptops have been tampered with. Previous conventional security for electronic equipment may involve either physical security (i.e. handcuffing the laptop to oneself) or having a software password. Neither has been effective in curbing computer-related crime. Therefore a need has arisen to deter theft of laptops and to secure the contents of laptops when the owner/operator is unavailable.

### Summary of the Invention

A portable electronic equipment key (PEEK) system is disclosed, which would have a TIRIS RF-ID transponder (as disclosed in U.S. patent number 5,450,088 or 5,074,774) manifested as a key fob, in a ring, in the form of a credit card or a clip-on to a watch band, etc. of the equipment owner/user. The reader would be a 16 pin ASIC, such as one made by Texas Instruments, which could easily be integrated onto the electronic equipment motherboard by the manufacturer. In order to activate the electronic equipment, the transponder is presented by the user to the electronic equipment. Only when the reader reads the proper identification code stored in the user/owner's transponder does the computer turn on and or 'boot-up' and begin initialization procedures. In addition, operator access to the computer's operating system can be controlled using the same technology.

The system disclosed by the present application proves is low cost, and high security that is achieved at no inconvenience to the equipment user/owner. Additionally, theft deterrence achieved.

### Brief Description of the Drawings

The present invention will now be further described, by way of example, with reference to the accompanying drawings in which:

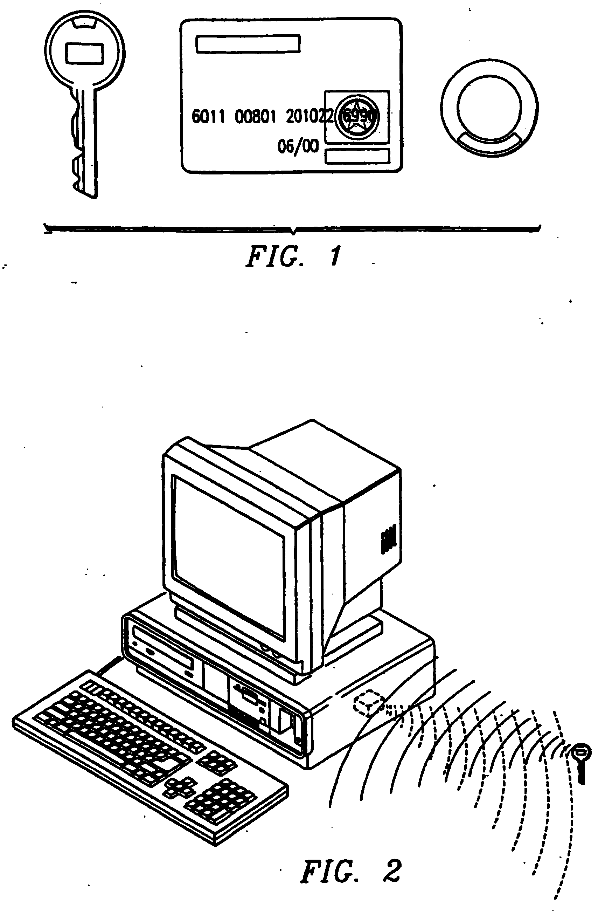

Figure 1 illustrates the transponder manifested as several possible shapes; as a key fob, in a ring, as a credit card.
Figure 2 illustrates the interaction between the transponder and the electronic equipment authorizing use of the electronic equipment.

### Detailed Description of the Preferred Embodiments

A portable electronic equipment key(PEEK) system is disclosed comprising a TIRIS transponder provided as a key fob, in a ring, in the form of a credit card or a clip-on to a watch band of the equipment user/owner and a reader which has been integrated into the CPU or the brains of the equipment. Of course, the invention does not need to be limited to a reader integrated into the CPU of a computer. Instead, the reader may be a stand-alone integrated circuit or it might be integrated into any number of existing IC's within the computer or mounted onto any number of circuit boards within the computer. In addition, the examples of ways in which the transponder may be provided are merely provided as such and are not intended to limit the scope of the present application. The transponder need only be conveniently located on the owner/user's person or belongings such that presentation of the transponder to the electronic equipment is easily and conveniently accomplished. In simplistic terms, upon presentation of the transponder to the electronic equipment, the equipment will read the identification code of the transponder and will enable or turn on the electronic equipment if the identification code matches that of the equipment. If a mismatch occurs or there is no transponder to read, the electronic equipment will remain disabled or turned off.

More specifically and distinctly, the interchange between the reader and the transponder is described. At the point of manufacturing, a predetermined algorithm is stored in both the transponder and the reader of the computer. The TIRIS security processor in the reader programs the transponder (tag) with a 40 bit secret key that only the processor and the tag know. The 40 bit secret key, otherwise known as a Digital Signature Tag, is never transmitted through the air after programming. The secret key is then also made known to the microprocessor or another chip on the motherboard and the hard drive, for example. When turning on the computer, the reader issues a 40-bit challenge to the transponder. The transponder processes the 40 bit challenge using the predetermined algorithm, yields a 24 bit response and transmits the response back to the reader. In dependence upon the challenge sent, the reader expects a predetermined response. Upon receiving the predetermined response, the reader sends an enable signal to the computer and the computer turns on. The above is a simplistic representation of the invention, whereas the invention may disable and enable many facets of the computer such as input output (I/O) ports, system Basic Input Output System (BIOS), etc, in dependence upon the reader receiving the aforementioned predetermined response. The examples of computer facets described are not an exhaustive list but instead are merely meant as examples and are not intended to limit the scope of the invention.

The TIRIS RF-ID system requires no independent power source for the transponder as at least a read/only transponder is powered exclusively by the interrogation signal sent from the reader as disclosed in previously mentioned U.S. Patent No. 5,053,074. A full duplex system is also envisioned wherein the transponder simply absorbs/reflects different discrete amounts of the interrogation signal in dependence upon the identification code stored therein. If a larger read range is desired, the transponder can be battery operated as are the read/write transponders disclosed in previously mentioned U.S. Patent No. 5,450,088. The reader can be powered by the battery, which powers the equipment or computer itself or acquire power remotely via RF or other means, i.e. infrared.

Computer theft deterrence would not be the only benefit from the PEEK system. Operator access to a computer's operating system could be controlled similarly, effecting file security. For example, authorization levels for individuals could be set to run different levels of a computer program. A program could be implemented in the 'boot-up' sequence, which automatically logs the user's identification thereby tracking the users of a particular piece of electronic equipment.

The PEEK system could also be used to deter theft of high dollar components on the equipment. For example, the microprocessor or the hard drive may also be programmed to work only when the correct transponder has been presented to the computer. In addition, if the hard drive is removed, it will not work in another computer. This scenario is embodied in this fashion. A predetermined algorithm is stored in both the transponder and the reader of the computer at the manufacturing level. The TIRIS security processor in the reader programs the tag with a 40 bit secret key that only the processor and the transponder (tag) know. The 40 bit secret key, otherwise known as a Digital Signature Tag, is never transmitted through the air after programming. A transponder is either manufactured into, for example, the microprocessor and the hard drive of the computer or mounted thereto. The secret key is then also programmed into the microprocessor or another chip on the motherboard and the hard drive. When turning on the computer, the reader issues a 40-bit challenge to the transponder. The transponder processes the 40 bit challenge using the predetermined algorithm, yields a 24 bit response and transmits the response back to the reader. In dependence upon the challenge sent, the reader expects a predetermined response. Upon receiving the predetermined response, the reader sends an enable signal to the computer and the computer turns on. Similarly, the processor in the reader issues challenges first to either/or the microprocessor and the hard drive, and the same interchange described above occurs. Likewise, as a result of the reader receiving the predetermined responses from both the microprocessor and the hard drive, enable signals may be sent to the microprocessor and hard drive enabling operation in both components. Upon mismatch, the component won't receive the enable signal and will fail to operate. Upon no match(i.e. if no transponder is present), the component will also fail to receive an enable signal, thereby making the component useless if improperly removed.

Similarly, if all the components within a computer have transponders located thereon, upon boot-up, the reader also located within the computer can check to make certain that all the components have the same digital signature as does the reader. The proper licensed vendor could, of course, sell a replacement component with the proper digital signature. However, someone selling a knock-off component or one not licensed would sell a component without the proper digital signature and the computer would fail to run. This would prevent someone from replacing an original licensed component with a knock-off or illegitimate component.

The Peek system could also be used to implement maintenance and calibration information on engineering equipment. Read/Write transponders would best suit this purpose thereby allowing maintenance and calibration information to be programmed into each particular piece of equipment upon such maintenance and calibration occurring.

Furthermore, the TIRIS reader could be put into a mode in which it becomes a transponder. As a transponder, the reader would activate upon entering a magnetic field and transmit a reader ID number to another reader, perhaps disposed near an exit of a building. In this way, the removal of electronic equipment from certain premises can be detected, monitored and recorded automatically.

Computers are not the only equipment that could be protected using the PEEK system described above. Any electronic equipment with a control component and a memory, such as camcorders, cellular phones, cameras could be protected with the PEEK system above as described in the above paragraphs.

## Claims

1. A portable electronic equipment key system comprising:
a transponder for receiving a challenge and transmitting a response thereto; and
an electronic apparatus, comprising;
a memory circuit for storage of a key;
a reader for transmitting said challenge and for receiving said response, and for enabling the electronic equipment in response to said response being a predetermined response.

2. The equipment key according to claim 1, wherein said predetermined response comprises a function of said challenge and said key.

3. The equipment key according to claim 1 or claim 2, wherein said key comprises a predetermined code and a predetermined algorithm.

4. The equipment key according to any preceding claim, wherein said electronic apparatus comprises a computer.

5. The equipment key according to claim 4, wherein said reader is integrated into a central processing unit of said computer.

6. The equipment key according to any preceding claim, wherein said transponder is disposed on a credit card.

7. The equipment key according to any of claims 1 to 5, wherein said transponder is disposed on a key fob.

8. The equipment key according to any of claims 1 to 5, wherein said transponder is disposed on a ring.

9. The equipment key according to any of claims 1 to 5, wherein said transponder is disposed on a clip-on to a wrist band.

10. The equipment key according to any preceding claim, wherein said reader is powered via a battery.

11. The equipment key according to any preceding claim, wherein said reader is powered remotely via a remote source.

12. The equipment key according to any preceding claim, wherein said electronic apparatus further comprises:
a microprocessor programmed to operate solely upon receipt of an enable signal from said reader, said reader transmitting said enable signal in response to having received the predetermined response from said transponder.

13. The equipment key according to any of claims 1 to 11, wherein said electronic apparatus further comprises:
a hard drive programmed to operate solely upon receipt of an enable signal from said reader, said reader transmitting said enable signal in response to having received the predetermined response from said transponder.

14. A portable electronic equipment key system comprising:
an electronic apparatus, comprising;
a plurality of components;
a memory circuit for storage of a key;
a transponder associated with one or each of said components for receiving a challenge and transmitting a response thereto;
a reader for transmitting said challenge and for receiving said responses from said transponders, and for enabling said plurality of components in response to said responses being predetermined responses.

15. The equipment key according to claim 14, wherein said predetermined response comprises a function of said challenge and said key.

16. The equipment key according to claim 14 or claim 15, wherein said key comprises a predetermined code and a predetermined algorithm.

17. The equipment key according to any of claims 14 to 16, wherein said electronic apparatus comprises a computer.

18. The equipment key according to claim 17, wherein said reader stet integrated into a central processing unit of said computer.

19. The equipment key according to any of claims 14 to 18, wherein said transponder is disposed on a credit card.

20. The equipment key according to any of claims 14 to 18, wherein said transponder is disposed on a key fob.

21. The equipment key according to any of claims 14 to 18, wherein said transponder is disposed on a ring.

22. The equipment key according to any of claims 14 to 18, wherein said transponder is disposed on a clip-on to a wristband.

23. The equipment key according to any of claims 14 to 22, wherein said reader is powered via a battery.

24. The equipment key according to any of claims 14 to 22, wherein said reader is powered remotely via a remote source.

25. A portable electronic equipment key system comprising:
a transponder for receiving a challenge and transmitting a response thereto; and
an electronic apparatus, comprising;
memory for storage of a key;
a reader for transmitting said challenge and for receiving said response and enabling said electronic apparatus in response to said response being a predetermined response.

26. The equipment key according to any preceding claim, wherein enabling said electronic apparatus comprises enabling a system BIOS.

27. The equipment key according to any preceding claim, wherein enabling said electronic equipment comprises enabling I/O ports.
